# EUROPÄISCHE PATENTSCHRIFT

(11) **EP 0 988 678 B1**
(45) Veröffentlichungstag und Bekanntmachung des Hinweises auf die Patenterteilung: **21.04.2010**
(21) Anmeldenummer: 99910091.0
(22) Anmeldetag: 29.01.1999
(51) Int. Cl.: H02H 7/085, E05F 15/00, B60J 7/057, B60J 7/053

(54) **VERFAHREN UND VORRICHTUNG ZUM ANSTEUERN EINER SCHIEBE-HEBEDACHVORRICHTUNG**
METHOD AND DEVICE FOR CONTROLLING A SLIDING OR LIFTING SUN ROOF DEVICE
PROCEDE ET DISPOSITIF POUR COMMANDER UN SYSTEME DE TOIT OUVRANT COULISSANT

(30) Priorität: 09.04.1998 DE 19815960
(43) Veröffentlichungstag der Anmeldung: 29.03.2000
(73) Patentinhaber: ROBERT BOSCH GMBH, 70442 Stuttgart (DE)
(72) Erfinder: LAMM, Hubert, D-77876 Kappelrodeck (DE); HADERER, Günter, D-77815 Bühl (DE)
(86) Internationale Anmeldenummer: PCT/DE1999/000225
(87) Internationale Veröffentlichungsnummer: WO 1999/053589

(56) Entgegenhaltungen:
- EP-A- 0 691 724
- DE-A- 3 146 489
- DE-A- 4 416 803

## Beschreibung

### Stand der Technik

Die Erfindung geht aus von einem Verfahren und einer Vorrichtung nach dem Oberbegriff der Hauptansprüche.

Mit der DE 4416803 A1 ist ein Verfahren zum Erkennen eines Einklemmfalls bekannt geworden, bei dem mindestens zwei redundant arbeitende Sensoren verwendet werden. Dabei ist ein sogenanntes direkt erkennendes Sensorsystem mit einem indirekt erkennenden Sensorsystem miteinander redundant verschaltet.

Die EP 0691724 A1 beschreibt ein Schiebedach eines Kraftfahrzeugs, das auch als Schiebe-Hebe-Dach ausgebildet sein kann. Das Steuergerät des antreibenden Stellmotors weist hierbei eine Einklemmschutzfunktion auf.

Aus der DE PS 30 34118 ist ein Verfahren zur elektronischen Überwachung des Öffnungs- und Schließvorgangs von elektrisch betriebenen Fensterhebern und Schiebedächern in Kraftfahrzeugen bekannt. In festgelegten Bereichen des beim Öffnungs- und Schließvorgang des bewegten Teils zu durchlaufenden Weges wird der Elektromotor des Antriebs abgeschaltet, sobald bei Auftreten eines Blockierzustarldes, der durch eine Drehzahlerfassung des Antriebs festgestellt wird, ein zeitlicher Grenzwert erreicht wird. In einem anderen Bereich wird ein Einklemmschutz realisiert, indem beim Schließvorgang von der Drehzahl und von der Geschwindigkeit des bewegten Teils oder des Antriebsmotors abhängige Messwerte laufend ermittelt, mit einem auf einen Anfangsmesswert bezogenen Grenzwert verglichen werden und bei Grenzwertüberschreitung die Antriebsrichtung des Elektromotors kurzzeitig umgekehrt und dann der Antrieb abgeschaltet wird.

Eine Realisierung des Einklemmschutzes über die Erfassung und Auswertung der Drehzahl bei einem Schiebe-Hebedach beim Absenken des Schiebe-Hebedachdeckels aus seiner Hebelage in eine geschlossene Position ist damit jedoch nicht möglich, da bei einem fahrenden Kraftfahrzeug hohe Fahrgeschwindigkeiten zu einem Unterdruck oberhalb des ausgestellten Deckels führen, der der Schließbewegung des Deckels entgegenwirkt und somit zu einer Verringerung der erfaßten Drehzahl und zu einem Falschauslösen des Einklemmschutzes führt. Eine geringe Dachsteifigkeit des Kraftfahrzeugs vergrößert ebenfalls die Auswirkungen der am Deckel angreifenden Kräfte.

Aus der DE-OS 27 56 972 sind Schiebedächer mit Einklemmschutz bekannt, die zur Erfassung einer Einklemmsituation im Schiebebereich des Deckels den Motorstrom messen und auswerten. Dieser Einklemmschutz ist jedoch aus oben genannten Gründen ebenfalls nicht im Hebebereich des Schiebe-Hebedaches zu verwenden.

Weitere am Markt bekannte Einklemmschutzvorrichtungen wie beispielsweise Lichtschranken oder Drucksensoren im Öffnungsbereich des Schiebedaches können aufgrund der Dachgeometrie nur schwer in der Deckeldichtung oder in der Schiebedachöffnung eingesetzt werden.

### Vorteile der Erfindung

Das erfindungsgemäße Verfahren und die erfindungsgemäße Vorrichtung mit den kennzeichnenden Merkmalen der Hauptansprüche hat den Vorteil, daß ein Einklemmschutz für ein Schiebe-Hebedach beim Schließen aus seiner Hebelage in seine geschlossene Position realisiert ist, indem eine Einklemmsituation eines zwischen dem Schiebe-Hebedachdeckel und der Schiebe-Hebedachöffnung eingeklemmten Gegenstandes durch einen Sensor detektiert wird.

Erfindungsgemäß ist weiterhin vorgesehen, für die Detektierung einer Einklemmsituation eine beweglich an der Dachkante des Kraftfahrzeugs innerhalb der Schiebe-Hebedachöffnung angeordnete Wasserrinne zu verwenden Die Wasserrinne verhindert, daß auf dem Kraftfahrzeugdach befindliches Wasser, beispielsweise bei einer Beschleunigung des Kraftfahrzeugs, durch die Schiebe-Hebedachöffnung in das Wageninnere gelangt.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, daß die Wasserrinne über eine Drehachse und ein Federmittel im hinteren Teil der Schiebe-Hebedachöffnung angeordnet ist, beispielsweise an einem beweglichen Führungsteil des Schiebe-Hebedaches, das das Öffnen des Deckels in eine Schiebelage ermöglicht, so daß sie einerseits einen unbelasteten Zustand oder eine Ruheposition bei geöffnetem Deckel einnimmt oder andererseits in einen, von der auf die Wasserrinne einwirkenden Kraft abhängigen belasteten Zustand niedergedrückt und gespannt wird und schließlich in eine Schließlage bei geschlossenem Deckel überführt wird.

In einem Einklemmfall wird der zwischen Schiebe-Hebedachdeckel und Wasserrinne eingeklemmte Gegenstand durch die Absenkbewegung des Deckels gegen die Wasserrinne gedrückt, so daß die Wasserrinne mit fortschreitender Klemmkraft in ihre Schließlage überführt wird. Vorteilhafterweise wird die Schließlage, eine zuvor erreichte Klemmlage oder eine Bewegung der Wasserrinne durch einen Sensor detektiert, der ein Sensorsignal für eine Steuerung generiert. Die Steuerung wertet das Sensorsignal im Hinblick auf eine Einklemmsituation oder einem normalen Schließvorgang des Schiebe-Hebedachdeckels aus.

Vorteilhaft ist weiterhin, daß der Sensor durch einen Schalter realisiert ist, der die Schließ- oder Klemmlage der Wasserrinne und somit eine vorgegebene Lage detektiert, die der Einwirkung einer vorbekannten Verstell- bzw. Einklemmkraft auf die Wasserrinne entspricht.

Weiterhin ist vorteilhaft, daß der Sensor als Winkelgeber ausgebildet ist, so daß nicht lediglich die Schließ- oder die Klemmlage der Wasserrinne detektiert, sondern die Drehbewegung der Wasserrinne beispielsweise aus der Ruhelage in die Schließlage kontinuierlich oder teilweise kontinuierlich überwacht wird. Damit ist bereits in Abhängigkeit der durch den Schiebe-Hebedachdeckel auf den eingeklemmten Gegenstand ausgeübten Einklemmkraft eine Drehbewegung der Wasserrinne um ihre Befestigung an dem Dach detektiert, so daß ein Sensorsignal in Abhängigkeit der zunehmenden Verstell- bzw. Einklemmkraft über den Auslenkwinkel der Wasserrinne generiert wird. Damit ist ein besonders sicherer und schnell ansprechender Einklemmschutz gewährleistet.

Besonders vorteilhaft ist weiterhin die Auswertung des Sensorsignals in der Steuerung. Üblicherweise wird die Bewegung des Schiebe-Hebedaches über einen Positionsregelkreis geregelt oder über eine einfache Steuerung angesteuert. Beispielsweise wird bei einem Positionsregelkreis die Verstellbewegung des Schiebe-Hebedaches, eingeleitet durch die Vorgabe eines neuen Sollwertes, von an sich bekannten Positionssensoren, beispielsweise Hallsensoren oder Absolutwertgebern, erfaßt und der Steuerung zur Ermittlung der Istposition des Schiebe-Hebedaches zugeführt. In der Steuerung wird ein Istwert-Sollwertvergleich durchgeführt und die Verstellbewegung geregelt. Die Steuerung ermittelt aus der tatsächlichen Istposition des Schiebe-Hebedaches und dem Sensorsignal, ob ein normaler Schließvorgang oder eine Einklemmsituation vorliegt.

Besonders vorteilhaft ist weiterhin, daß durch die Auswertung des Sensorsignals in der Steuerung eine direkte Schließkraftbegrenzung realisiert wird, die nicht dem Störeinfluß von Windlast, d. h. Unterdruck bei hohen Kraftfahrzeuggeschwindigkeiten, oder der Charakteristik der Gesamtsystemfederrate des Schiebe-Hebedaches unterliegt.

### Zeichnung

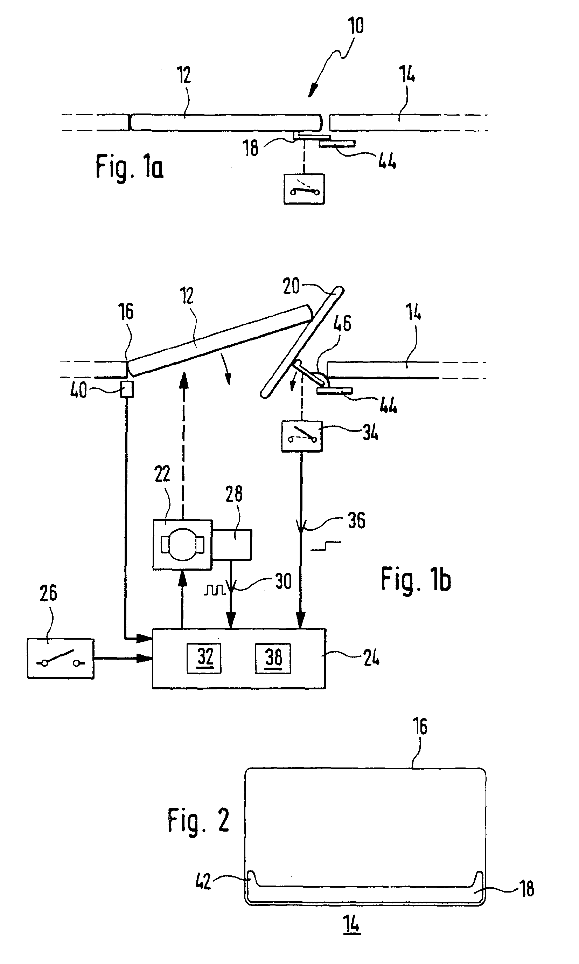

Ausführungsbeispiele der Erfindung sind in der Zeichnung dargestellt und in der nachfolgenden Beschreibung näher erläutert. Figur 1 zeigt ein bevorzugtes Ausführungsbeispiel der erfindungsgemäßen Vorrichtung mit einem Schiebe-Hebedach in Querschnitt und Figur 2 das Schiebe-Hebedach in Aufsicht.

### Beschreibung des Ausführungsbeispiels

Figur 1 zeigt ein Kraftfahrzeugschiebedach 10 mit einem Schiebedachdeckel 12, der eine Öffnung in einem Kraftfahrzeugdach 14 verschließt. Der Schiebedachdeckel 12 ist über eine nicht dargestellte Kulissenführung derart am Kraftfahrzeug angebracht, daß das Dach 12 über eine Drehachse 16 in eine Hebelage (Figur 1b) ausstellbar oder über eine geschlossene Position (Figur 1a) in eine Schiebelage ansteuerbar ist. Die Ansteuerung ist hierbei als Positionsregelkreis realisiert.

Zum Auffangen des sich gegebenenfalls auf dem Dach 14 befindlichen Wassers ist eine Wasserrinne 18 an einer der Drehachse 16 gegenüberliegenden Seite der Schiebe-Hebedachöffnung drehbar an einem verschiebbaren Führungsteil 44 angeordnet und durch mindestens eine Spiralfeder 46 als Federmittel, die sich jeweils in einem Befestigungspunkt der Wasserrinne 18 mit dem Führungsteil 44 befindet, spannbar. Durch den geschlossenen Schiebe-Hebedachdeckel 12 ist die Wasserrinne 18 in eine Schließlage gemäß Figur 1a gedrückt.

Die Wasserrinne 18 geht bei dem Ausstellen des Schiebe-Hebedachdeckels 12 in seine Hebelage in eine entspannte Ruhelage über. Alternativ kann ebenfalls ein Anschlag für die Ruhelage der Wasserrinne 18 vorgesehen sein, so daß diese sich vorgespannt in der Ruhelage befindet.

Zwischen Wasserrinne 18 bzw. Dach 14 und Schiebe-Hebedachdeckel 12 kann im geöffneten Zustand des Daches 10 ein Gegenstand 20 in die Öffnung gelangen. Dieser Gegenstand 20 ist beispielsweise eine Stange, ein Körperteil wie z. B. ein Finger oder ein Arm, oder ein anderer einklemmbarer Gegenstand 20.

Der Deckel 12 wird durch einen reversierbaren Elektromotor 22 über ein nicht dargestelltes Getriebe mit beispielsweise einer Kulissenführung in eine Hebe-, Schiebelage oder eine geschlossene Position angesteuert. Die Ansteuerung des Motors 22 erfolgt unmittelbar über eine Steuerung 24 und mittelbar über einen durch einen Benutzer betätigbaren Bedienschalter 26 zur Positionsvorgabe bzw. Sollwertvorgabe des Schiebe-Hebedachdeckels 12. Als Bedienschalter 26 ist vorzugsweise ein Potentiometer und/oder ein Wippschalter vorgesehen, mit dem der Fahrer des Kraftfahrzeugs kontinuierlich oder mittels Rasten diskrete Sollpositionen des Schiebe-Hebedaches einstellt.

Dem Motor zugeordnet ist ein Positionssensor 28, vorzugsweise ein Hallsensor, der mit einem oder mehreren auf der Ankerwelle des Motors 22 befindlichen Ringmagneten zusammenwirkt und Hallsensorsignale 30 in Abhängigkeit der Drehung der Ankerwelle abgibt. Die Hallsensorsignale 30 werden über einen Interrupteingang der Steuerung 24 zugeführt und über einen in diesem befindlichen Zähler 32 gezählt. Der Zählerstand gibt die Position des Schiebe-Hebedachdeckels innerhalb seines Verstellweges an. Die geschlossene Position des Schiebe-Hebedachdeckels ist somit ebenfalls über den Zählerstand des Zählers 32 ermittelbar. Zur Normierung des Zählers 32 wird der Schiebe-Hebedachdeckel 12 in einen mechanischen Anschlag verfahren. Dies wird durch die Steuerung 24 erkannt und der Zähler 32 entsprechend zurückgesetzt. Alternativ kann jedoch ein Mikroschalter 40 die geschlossene Position des Deckels 12 erfassen oder zur Normierung herangezogen werden.

Erfindungsgemäß führt ein Schalter 34 als Sensor, der eine Schließlage bei geschlossenem Dach oder eine zwischen Ruhelage und Schließlage befindliche Klemmlage der Wasserrinne 18 detektiert, der Steuerung 24 ein entsprechendes Schaltersignal 36 zu.

Zur Auswertung des Schaltersignals 36 weist die Steuerung 24 einen Vergleicher 38 auf, der das Schaltersignal 36 mit der erfaßten Istlage vergleicht.

Figur 2 zeigt eine Aufsicht des Schiebe-Hebedaches 10 gemäß Figur 1, jedoch ohne Deckel 12. Dargestellt ist die Schiebe-Hebedachöffnung in dem Kraftfahrzeugdach 14 mit der an der Drehachse 16 gegenüberliegenden Seite der Öffnung angebrachten Wasserrinne 18.

Das erfindungsgemäße Verfahren wird nun anhand der erfindungsgemäßen Vorrichtung gemäß Figur 1 beschrieben.

Mit dem Hallsensor 28 wird die Bewegung und die Drehrichtung der Motorankerwelle durch die Steuerung 24 erfaßt. Der Drehung der Motorankerwelle entsprechend wird der Deckel 12 in seine Hebelage oder in eine Schiebelage verfahren. Somit können über die Hallsensorsignale 30 und dem Zähler 32 die aktuelle Position, Geschwindigkeit und Bewegungsrichtung des Deckels 12 ermittelt werden. Jeder Position des Deckels 12 ist folglich über den gesamten Verstellweg ein Wert des Zählers 32 zugeordnet, der je nach Drehrichtung die Interrupts aufwärts oder abwärts zählt. Über einen mechanischen Anschlag des Deckels 12 wird der Zähler 32 auf einen vorgegebenen Wert gesetzt, beispielsweise Null. Damit ist der Verstellbereich des Deckels 12 kontinuierlich erfaßbar und die aktuelle Position des Deckels 12 bekannt. Schiebebereich und Hebebereich des Schiebedachdeckels 12 sind anhand des Zählwertes des Zählers 32 unterscheidbar.

Der im folgenden beschriebene Einklemmschutz ist wirksam, wenn der Deckel 12 aus seiner Hebelage in seine geschlossene Position verfahren wird. Hierzu steuert die Steuerung 24 in Abhängigkeit der Hallsensorsignale 30 des Hallsensors 28 und der durch den Bedienschalter 26 zugeführten Signale den Motor 22 an. Damit ist folglich ein Positionsregelkreis realisiert.

Gesetzliche Normen, wie z. B. die US-Prüfnorm "FMVSS 118" oder die deutschen "Richtlinien für fremdkraftbetätigte Fenster in Pkw", geben beispielsweise vor, daß auf einen zwischen Deckel 12 und Wasserrinne 18 eingeklemmten Gegenstand 20 keine höheren Kräfte als 100 N einwirken dürfen. Bei einem Schiebedach 10 ohne einen Einklemmschutz würden diese Einklemmkräfte im Einklemmfall erheblich überschritten werden. Das erfindungsgemäße Erkennen eines eingeklemmten Gegenstandes und die Begrenzung der Schließkräfte des Deckels 12 auf beispielsweise unter 100 Newton erfolgt über den Schalter 34 und die Steuerung 24.

Bei einer solchen Einklemmsituation wird die durch den Motor 22 aufgebrachte Verstellkraft bzw. das Verstelldrehmoment über den Deckel 12 auf den eingeklemmten Gegenstand 20 auf die beweglich gelagerte Wasserrinne 18 übertragen, so daß diese sich aus der Ruheposition mit zunehmender wirksamer Kraft in eine Klemmlage abgesenkt wird. Jede Position der Wasserrinne 18 entspricht einer bekannten einwirkenden Klemmkraft. Da die Klemmlage durch den Schalter 34 detektiert wird, kennzeichnet das Schaltersignal 36 das Einwirken dieser bekannten Kraft auf den Gegenstand 20. Beispielsweise generiert der Schalter 34 ein Schaltersignal 36, wenn die Verstellkraft des Deckels 12 den Wert 80 Newton auf den Gegenstand 20 bzw. die Wasserrinne 18 ausübt.

Die Steuerung 24 führt in dem Vergleicher 38 einen Vergleich der aktuellen Position des Deckels 12 mit dem Schaltersignal 36 in der Hinsicht durch, ob das Schaltersignal 36 mit der geschlossenen Position des Deckels 12 gemäß Fig. 1a oder mit einer Hebeposition des Deckels 12 gemäß Fig. 1b zusammenfällt. Bei Letzterem veranlaßt die Steuerung 24 ein Anhalten oder ein Reversieren der Drehrichtung des Motors 22, um die Einklemmkräfte gering zu halten oder den eingeklemmten Gegenstand 20 wieder freizugeben.

Durch den Vergleich der aktuellen Position des Deckels 12 mit dem Schaltersignal 36 ist ebenfalls eine Erfassung der Dicke des eingeklemmten Gegenstandes 20 möglich, so daß in der Steuerung 24 die erlaubten Einklemmkräfte in Abhängigkeit der Dicke festzulegen sind. So ist beispielsweise gemäß dem US-Sicherheitsstandard FMVSS118 eine Einklemmkraft von maximal 100 Newton bei einer Dicke von 4mm bis 200mm des eingeklemmten Gegenstandes 20 erlaubt.

Darüber hinaus ist gemäß der FMVSS118 die Federkonstante des einzuklemmenden Testgegenstandes 20 in Abhängigkeit von dessen Dicke festgelegt: mindestens 65 Newton/mm für einen Durchmesser von 25mm oder weniger, mindestens 20 Newton/mm für einen Durchmesser von mehr als 25mm. Die Federkonstante gibt somit einen Wert für die Härte des eingeklemmten Gegenstandes 20 an.

Das Einstellen des Einklemmschutzes und der Schließkraftbegrenzung bei harten und weichen Gegenständen 20 zur Einhaltung von gesetzlichen Vorschriften erfolgt einerseits über die Federkonstante des Federmittels 46 und damit über die Kraftaufnahme bei Auslenkung der Wasserrinne 18 aus der Ruhelage, oder andererseits über die durch den Schalter 34 erfaßte Position der Klemmlage, d.h. ein Schaltersignal 36 kann bereits bei einer kleinen oder aber erst bei einer großen Auslenkung der Wasserrinne 18 generiert werden. Die Abhängigkeit beider Größen und die optimale Einstellung dieser kann experimentell bestimmt und für jedes Kraftfahrzeugmodell eingestellt werden.

Bei einer weichen Federkonstanten des Federmittels bzw. großer Kraftaufnahme je Weg der Wasserrinne 18 können ebenfalls Einklemmsituationen mit harten Gegenständen 20 (hohe Federkonstante), an denen sich die Einklemmkräfte schnell aufbauen, sicher und schnell gemäß der gesetzlichen Vorgaben detektiert werden.

Die Ausgestaltung der Wasserrinne 18 kann für das erfindungsgemäße Verfahren gemäß Figur 2 optimiert werden. Bei einer rechteckigen Schiebedachöffnung ist beispielsweise die Wasserrinne 18 in ihrer Längsrichtung der Dachkante entlang fortzuführen, so daß sich Ansätze 42 ergeben, mit denen ebenfalls die Scherenbereiche des Deckels 12 mit dem Dach 14 wenigstens teilweise durch den Einklemmschutz erfaßt werden können. Ferner kann die Breite der Wasserrinne 18 oder deren Ruhelage entsprechend den Erfordernissen variiert und optimiert werden.

In einem verbesserten Ausführungsbeispiel wird anstelle eines Schalters ein Winkelgeber 34, Drehpotentiometer oder eine Schaltleiste verwendet. Dieser detektiert nicht lediglich eine Schließ- oder Klemmlage der Wasserrinne 18, sondern kontinuierlich, teilweise kontinuierlich oder stufenweise die Drehbewegung der Wasserrinne 18 um ihre Befestigung am Dach 14. Somit wird bereits vor dem Erreichen einer maximalen Einklemmkraft ein kontinuierliches Signal über einen längeren Weg an die Steuerung 24 geleitet und ausgewertet. Zur Auswertung wird vorzugsweise die Kraftänderung, d.h. Wegänderung pro Zeitintervall herangezogen, die mit einem entsprechend gewählten Grenzwert verglichen wird. Da ein längerer Beobachtungszeitraum hiermit gegeben ist, kann die Steuerung fein auf eine Einklemmsituation abgestimmt werden, so daß optimiert auf eine Einklemmsituation reagiert wird. Insbesondere sind unterschiedliche Federkonstanten der eingeklemmten Gegenstände 20 durch unterschiedliche Auswertungen des Sensorsignals 36 berücksichtigbar.

In einem weiteren Ausführungsbeispiel erfolgt die Normierung des Schiebe-Hebedaches 10 über den Verstellbereich oder das Rücksetzen des Zählers 32 durch einen Mikroschalter 40 als Referenzschalter, der beispielsweise bei Durchgang des Deckels 12 von seiner Hebelage über die geschlossene Position in seine Schiebelage einen Signalwechsel generiert und der Nulldurchlauf des Pegelwechsels der geschlossenen Position des Deckels 12 zugeordnet wird.

## Patentansprüche

1. Verfahren zum Ansteuern einer Schiebe-Hebedachvorrichtung, insbesondere eines Kraftfahrzeugs, mit einer Steuerung (24) zur Ansteuerung eines reversierbaren Antriebs (22), wobei beim Absenken des Schiebe-Hebedachdeckels (12) durch den Antrieb (22) aus seiner geöffneten Hebelage in seine geschlossene Position ein Einklemmen eines Gegenstandes (20) zwischen Schiebe-Hebedachdeckel (12) und Schiebe-Hebedachöffnung durch die Steuerung (24) detektiert wird,
**dadurch gekennzeichnet, dass** eine Wasserrinne (18) beweglich an einer Seite der Schiebe-Hebedachöffnung angeordnet ist,
und die Wasserrinne (18) durch den eingeklemmten Gegenstand (20) aus ihrer Ruheposition ausgelenkt wird und diese Auslenkung durch einen Sensor (34) erfasst wird, der ein Sensorsignal (36) an die Steuerung (24) abgibt.

2. Verfahren nach Anspruch 1, **dadurch gekennzeichnet, dass** durch den Sensor (34), insbesondere einem Schalter, eine festlegbare Größe der Auslenkung der Wasserrinne (18), insbesondere eine Klemmlage oder eine Schließlage, detektiert wird.

3. Verfahren nach Anspruch 1, **dadurch gekennzeichnet, dass** die Auslenkung der Wasserrinne (18) kontinuierlich, teilweise kontinuierlich oder stufenweise über einen Wegbereich der Wasserrinne (18) durch den Sensor (34), insbesondere einen Winkelgeber oder eine Schaltleiste, erfasst wird und ein Sensorsignal (36) in Abhängigkeit der Größe der Auslenkung an die Steuerung (24) ausgegeben wird.

4. Verfahren nach einem der vorhergehenden Ansprüche, **dadurch gekennzeichnet, dass** der Antrieb (22) durch die Steuerung (24) in Abhängigkeit von dem die Auslenkung der Wasserrinne (18) kennzeichnenden Sensorsignal (34) gestoppt und/oder reversiert wird, so dass die Verstellbewegung des Schiebe-Hebedachdeckels (12) gestoppt oder der Deckel (12) wieder geöffnet wird.

5. Verfahren nach einem der vorhergehenden Ansprüche, **dadurch gekennzeichnet, dass** durch die Steuerung (24) ein Vergleich des durch eine Positionsistwerterfassung (28) ermittelbaren Positions-Istwertes des Schiebe-Hebedachdeckels (12) mit dem Sensorsignal (36) durchgeführt wird und in Abhängigkeit des Vergleichsergebnisses eine Einklemmsituation oder ein geschlossener Zustand des Schiebe-Hebedachdeckels (12) durch die Steuerung (24) erkannt wird.

6. Vorrichtung zum Ansteuern einer Schiebe-Hebedachvorrichtung, insbesondere eines Kraftfahrzeugs, mit einer Steuerung (24) zur Ansteuerung eines reversierbaren Antriebs (22), wobei eine Wasserrinne (18) beweglich an einer Seite der Schiebe-Hebedachöffnung angeordnet ist, **dadurch gekennzeichnet, dass** die Wasserrinne (18) durch einen zwischen Schiebe-Hebedachdeckel (12) und Schiebe-Hebedachöffnung eingeklemmten Gegenstand (20) aus ihrer Ruhelage auslenkbar ist und dass ein Sensor (34) die Auslenkung der Wasserrinne (18) erfasst und ein Sensorsignal (36) an die Steuerung (24) zur Realisierung eines Einklemmschutzes abgibt.

7. Vorrichtung nach Anspruch 6, **dadurch gekennzeichnet, dass** als Sensor (34) ein oder mehrere Schalter, insbesondere eine Schaltleiste, oder ein Winkelgeber verwendbar ist.

8. Vorrichtung nach Anspruch 6, **dadurch gekennzeichnet, dass** die Wasserrinne (18) an der Seite der Schiebe-Hebedachöffnung angeordnet ist, die einer Drehachse (16) des Schiebe-Hebedachdeckels (12) gegenüberliegt.

## Claims

1. Method for actuating a tilt-and-slide sunroof apparatus, in particular of a motor vehicle, having a control means (24) for actuating a reversible drive (22), with trapping of an object (20) between the tilt-and-slide sunroof panel (12) and the tilt-and-slide sunroof opening being detected by the control means (24) as the tilt-and-slide sunroof panel (12) is lowered from its open lifted position to its closed position by the drive (22), **characterized in that** a water channel (18) is arranged on one side of the tilt-and-slide sunroof opening such that it can move, and the water channel (18) is deflected out of its inoperative position by the trapped object (20) and this deflection is sensed by a sensor (34) which emits a sensor signal (36) to the control means (24).

2. Method according to Claim 1, **characterized in that** a definable variable for the deflection of the water channel (18), in particular a trapping situation or a closed position, is detected by the sensor (34), in particular a switch.

3. Method according to Claim 1, **characterized in that** the deflection of the water channel (18) is continuously, partially continuously or intermittently sensed over a region of travel of the water channel (18) by the sensor (34), in particular an angle transmitter or a switching strip, and a sensor signal (36) is output to the control means (24) as a function of the variable for the deflection.

4. Method according to one of the preceding claims, **characterized in that** the drive (22) is stopped and/or reversed by the control means (24) as a function of the sensor signal (34) which characterizes the deflection of the water channel (18), and therefore the adjusting movement of the tilt-and-slide sunroof panel (12) is stopped or the panel (12) is opened again.

5. Method according to one of the preceding claims, **characterized in that** the control means (24) compares the actual position value of the tilt-and-slide sunroof panel (12), which value can be determined by an actual position value sensing means (28), with the sensor signal (36), and a trapping situation or a closed state of the tilt-and-slide sunroof panel (12) is identified by the control means (24) as a function of the result of the comparison.

6. Apparatus for actuating a tilt-and-slide sunroof apparatus, in particular of a motor vehicle, having a control means (24) for actuating a reversible drive (22), with a water channel (18) being arranged on one side of the tilt-and-slide sunroof opening such that it can move, **characterized in that** the water channel (18) can be deflected out of its inoperative position by an object (20) which is trapped between the tilt-and-slide sunroof panel (12) and the tilt-and-slide sunroof opening, and **in that** a sensor (34) senses the deflection of the water channel (18) and emits a sensor signal (36) to the control means (24) in order to provide anti-trapping protection.

7. Apparatus according to Claim 6, **characterized in that** one or more switches, in particular a switching strip, or an angle transmitter can be used as the sensor (34).

8. Apparatus according to Claim 6, **characterized in that** the water channel (18) is arranged on that side of the tilt-and-slide sunroof opening which is opposite a rotation axis (16) of the tilt-and-slide sunroof panel (12).

## Revendications

1. Procédé pour commander un système de toit ouvrant coulissant, notamment pour un véhicule automobile, comprenant une commande (24) pour commander un entraînement réversible (22), dans lequel, lors de l'abaissement du panneau de toit ouvrant coulissant (12) par l'entraînement (22) depuis sa position levée ouverte dans sa position fermée, un coincement d'un objet (20) entre le panneau de toit ouvrant coulissant (12) et l'ouverture du toit ouvrant coulissant est détectée par la commande (24),
**caractérisé en ce qu'**une rigole d'eau (18) est disposée de manière mobile sur un côté de l'ouverture du toit ouvrant coulissant, et la rigole d'eau (18) est déviée par l'objet coincé (20) hors de sa position de repos et cette déviation est détectée par un capteur (34) qui envoie un signal de capteur (36) à la commande (24).

2. Procédé selon la revendication 1, **caractérisé en ce qu'**une valeur déterminable de la déviation de la rigole d'eau (18), notamment une position de coincement ou une position de fermeture, est détectée par le capteur (34), notamment un commutateur.

3. Procédé selon la revendication 1, **caractérisé en ce que** la déviation de la rigole d'eau (18) est détectée en continu, partiellement en continu ou de manière discontinue, par le capteur (34), notamment un détecteur angulaire ou une barrette de commutation, sur une plage de déplacement de la rigole d'eau (18), et un signal de capteur (36) est émis au niveau de la commande (24) en fonction de l'ampleur de la déviation.

4. Procédé selon l'une quelconque des revendications précédentes, **caractérisé en ce que** l'entraînement (22) est arrêté et/ou inversé par la commande (24) en fonction du signal de capteur (34) caractérisant la déviation de la rigole d'eau (18), de sorte que le mouvement de déplacement du panneau de toit ouvrant coulissant (12) soit arrêté ou de sorte que le panneau (12) soit à nouveau ouvert.

5. Procédé selon l'une quelconque des revendications précédentes, **caractérisé en ce que** la commande (24) effectue une comparaison de la valeur réelle de position du panneau de toit ouvrant coulissant (12) déterminable par une détection des valeurs réelles de position (28) avec le signal de capteur (36), et en fonction du résultat de la comparaison, une situation de coincement ou un état fermé du panneau de toit ouvrant coulissant (12) est reconnu(e) par la commande (24).

6. Dispositif de commande d'un dispositif de toit ouvrant coulissant, notamment pour un véhicule automobile, comprenant une commande (24) pour commander un entraînement réversible (22), une rigole d'eau (18) étant disposée de manière déplaçable sur un côté de l'ouverture du toit ouvrant coulissant, **caractérisé en ce que** la rigole d'eau (18) peut être déviée hors de sa position de repos par un objet (20) coincé entre le panneau de toit ouvrant coulissant (12) et l'ouverture du toit ouvrant coulissant et **en ce qu'**un capteur (34) détecte la déviation de la rigole d'eau (18) et émet un signal de capteur (36) au niveau de la commande (24) pour réaliser une protection contre le coincement.

7. Dispositif selon la revendication 6, **caractérisé en ce que** l'on peut utiliser comme capteur (34) un ou plusieurs commutateurs, notamment une barrette de commutation, ou un détecteur angulaire.

8. Dispositif selon la revendication 6, **caractérisé en ce que** la rigole d'eau (18) est disposée du côté de l'ouverture du toit ouvrant coulissant qui est en regard d'un axe de rotation (16) du panneau de toit ouvrant coulissant (12).
